# EUROPEAN PATENT SPECIFICATION

(11) **EP 1 886 305 B1**
(45) Date of publication and mention of the grant of the patent: **09.07.2008**
(21) Application number: 06763077.2
(22) Date of filing: 03.05.2006
(51) Int. Cl.: G10L 19/00, G06T 1/00

(54) **METHOD AND APPARATUS FOR WATERMARKING AN AUDIO OR VIDEO SIGNAL WITH WATERMARK DATA USING A SPREAD SPECTRUM**
VERFAHREN UND VORRICHTUNG ZUR KENNZEICHNUNG EINES AUDIO- ODER VIDEOSIGNALS MIT WASSERZEICHENDATEN MITTELS EINES SPREIZSPEKTRUMS
PROCEDE ET APPAREIL DESTINES A FILIGRANER NUMERIQUEMENT UN SIGNAL AUDIO OU VIDEO AVEC DES DONNEES DE FILIGRANE NUMERIQUE UTILISANT UN SPECTRE ETALE

(30) Priority: 02.06.2005 EP 05090175
(43) Date of publication of application: 13.02.2008
(73) Proprietor: Thomson Licensing, 92100 Boulogne-Billancourt (FR)
(72) Inventor: BAUM, Peter, Georg, 30539 Hannover (DE); VOESSING, Walter, 30455 Hannover (DE)
(74) Representative: Hartnack, Wolfgang
(86) International application number: PCT/EP2006/062001
(87) International publication number: WO 2006/128769

(56) References cited:
- WO-A-01/39121
- WO-A-03/103273
- XING HE ET AL: "Improved Spread Spectrum Digital Audio Watermarking Based on a Modified Perceptual Entropy Psychoacoustic Model" SOUTHEASTCON, 2005. PROCEEDINGS. IEEE FT. LAUDERDALE, FLORIDA, USA APRIL 8-10, 2005, PISCATAWAY, NJ, USA,IEEE, 8 April 2005 (2005-04-08), pages 283-286, XP010789741 ISBN: 0-7803-8865-8

## Description

The invention relates to a method and to an apparatus for watermarking an audio or video signal with watermark data using a spread-spectrum and more than one spreading sequence.

### Background

Watermark information (denoted WM) consists of several symbols which are embedded continuously in the carrier content, e.g. in (encoded) audio or video signals, e.g. in order to identify the author of the signals. At decoder site the WM is regained, for example by using correlation of the received signal with a known spreading sequence if spread-spectrum is used as underlying technology. In some watermark technology the watermark information is transmitted asynchronously, i.e. it is continuously tested whether or not WM can be embedded imperceptible within the (encoded) audio or video signals. Only if this is true a WM frame is transmitted. But a WM frame consists of some tens of symbols, each carrying one or more bits which are transmitted synchronously. That means, if the period in which the WM can be embedded is shorter than the frame length, some symbols cannot be recovered at receiver side.
Most WM technologies therefore transmit redundancy bits for error correction. But such error correction has a limited capacity only. An error correction can correct some symbols, if one or more symbols cannot be directly recovered at receiver side. But if the capacity of the error correction is exceeded, the WM can not be recovered.
Secondly, additional redundancy bits increase the length of the WM frame, which results in a higher probability that the frame is longer than the signal length or section in which the WM frame can be transmitted. Thirdly, error correction is mostly independent of the signal to be watermarked which results, due to the necessary parity bits, in a lower than necessary net bitrate for a 'good' signal and still not enough error correction for 'bad' signals. A 'good' signal can be recovered at decoder side whereas a 'bad' signal can not be recovered.

WO-A-01/06755 shows an energy level-dependent insertion of watermark data.
WO-A-03/103273 describes a system wherein different watermark signals are combined with independent channels of a multimedia signal.

### Invention

Watermarking of audio content can be facilitated by adding a spectrally shaped spread-spectrum signal to the audio signal. One problem is that for some audio signals it is not possible to retrieve and decode the spread spectrum even without an attack between the WM embedder and WM detector. In case it becomes clear at encoder side that the decoder will not be able to decode the current WM due to the current presence of a critical sound signal (e.g. a silent period or pause in a speech signal or a uniform brightness level region in a video signal), the level of the WM could be increased but in such case the WM signal would become audible or visible, respectively.

A problem to be solved by the invention is to increase the reliability of the watermarking without making it audible or visible, respectively, and without relying on a watermark signal error correction at decoder side. This problem is solved by the methods disclosed in claims 1 and 2. An apparatus that utilises this method is disclosed in claims 3 and 4.

According to the invention, not only is the watermark made audio or video signal level dependent, but also the spreading sequence used for the watermark is made audio or video signal level dependent. This means basically that the same WM symbol is encoded by several different spreading sequences. The encoder tests, which one of these WM symbols or sequences can be retrieved best in a decoder, and embeds that selected spreading sequence WM in the audio or video signal to be watermarked. At decoder side all candidate WM spreading sequences are correlated with the received signal and the spreading sequence with the best match is chosen as the correct one.
The invention makes watermarking of critical sound or image signals much more robust, which may make the difference between receiving a WM signal and receiving no WM signal at all. The above tests carried out in the encoder cost more processing power since multiple correlations are to be calculated. But advantageously, this does not necessarily increase the complexity and the required processing power at decoder side.

The invention is not limited to using spread-spectrum technology. Instead e.g. carrier based technology or echo hiding technology can be used for the watermarking coding and decoding.

In principle, the inventive method is suited for watermarking an audio or video signal with watermark data using a spread spectrum, said method including the steps:
a) modulating a first candidate encoder spreading sequence by watermark data bits so as to get a modulated watermark signal;
b) determining the current masking level of said audio or video signal and performing a corresponding psycho-acoustic or psycho-visual, respectively, shaping of said modulated watermark signal;
c) embedding said psycho-acoustically or psycho-visually shaped watermark signal in said audio or video signal;
d) spectrally whitening said audio or video signal including said embedded watermark signal;
e) de-spreading and demodulating said spectrally whitened audio or video signal including said embedded watermark signal using a correlation so as to get a first candidate watermark signal;
   - repeating steps a) to e) one or more times using different candidate encoder spreading sequences;
   - deciding which one of the correlation results yields the best match and outputting that watermarked audio signal which was watermarked with the corresponding candidate encoder spreading sequence,
   or is suited for watermarking an audio or video signal with watermark data using a spread spectrum, said method including the steps:
   - modulating a first and at least a second candidate encoder spreading sequence by watermark data bits so as to get correspondingly modulated watermark signals;
   - determining the current masking level of said audio or video signals and performing a corresponding psycho-acoustic or psycho-visual, respectively, shaping of said modulated watermark signals;
   - embedding said psycho-acoustically or psycho-visually shaped watermark signals in said audio or video signal resulting in a corresponding number of audio or video signals;
   - spectrally whitening said audio or video signals each one including said corresponding embedded watermark signal;
   - de-spreading and demodulating said spectrally whitened audio or video signals including said corresponding embedded watermark signal using a correlation so as to get a first and at least a second candidate watermark signal;
   - deciding which one of the correlation results yields the best match and outputting that watermarked audio signal which was watermarked with the corresponding candidate encoder spreading sequence.

In principle the inventive apparatus is suited for watermarking an audio or video signal with watermark data using a spread spectrum, said apparatus including:
a) means for modulating a first candidate encoder spreading sequence by watermark data bits so as to get a modulated watermark signal;
b) means for determining the current masking level of said audio or video signal and performing a corresponding psycho-acoustic or psycho-visual, respectively, shaping of said modulated watermark signal;
c) means for embedding said psycho-acoustically or psycho-visually shaped watermark signal in said audio or video signal;
d) means for spectrally whitening said audio or video signal including said embedded watermark signal;
e) means for de-spreading and demodulating said spectrally whitened audio or video signal including said embedded watermark signal using a correlation so as to get a first candidate watermark signal,
   whereby means a) to e) repeat the processing one or more times using different candidate encoder spreading sequences;
   - means for deciding which one of the correlation results yields the best match and outputting that watermarked audio or video signal which was watermarked with the corresponding candidate encoder spreading sequence,
   or is suited for watermarking an audio or video signal with watermark data using a spread spectrum, said apparatus including:
   - means for modulating a first and at least a second candidate encoder spreading sequence by watermark data bits so as to get correspondingly modulated watermark signals;
   - means for determining the current masking level of said audio or video signals and performing a corresponding psycho-acoustic or psycho-visual, respectively, shaping of said modulated watermark signals;
   - means for embedding said psycho-acoustically or psycho-visually shaped watermark signals in said audio or video signal resulting in a corresponding number of audio or video signals;
   - means for spectrally whitening said audio or video signals each one including said corresponding embedded watermark signal;
   - means for de-spreading and demodulating said spectrally whitened audio or video signals including said corresponding embedded watermark signal using a correlation so as to get a first and at least a second candidate watermark signal;
   - means for deciding which one of the correlation results yields the best match and outputting that watermarked audio or video signal which was watermarked with the corresponding candidate encoder spreading sequence.

Advantageous additional embodiments of the invention are disclosed in the respective dependent claims.

### Drawings

Exemplary embodiments of the invention are described with reference to the accompanying drawings, which show in:
- Fig. 1: known watermark encoder;
- Fig. 2: watermark decoder;
- Fig. 3: frame composition;
- Fig. 4: known WM embedding for a single line in the frequency domain using a first spreading sequence in the encoder;
- Fig. 5: whitened encoder output signal and decoded watermark in the decoder resulting from the known application of a first spreading sequence;
- Fig. 6: WM embedding for a single line in the frequency domain using a second spreading sequence in the encoder;
- Fig. 7: whitened encoder output signal and decoded watermark in the decoder resulting from the application of a second spreading sequence;
- Fig. 8: watermark encoder according to the invention.

### Exemplary embodiments

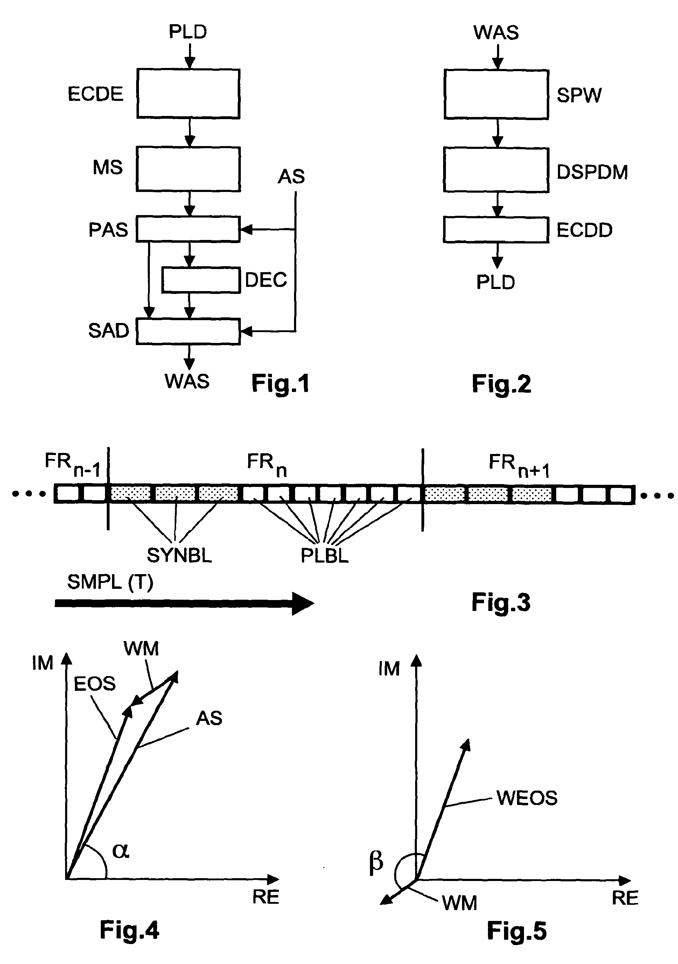

The smallest self-containing unit of a watermark is called a frame. Fig. 3 shows three successive frames FRₙ₋₁, FRₙ and FRₙ₊₁. A frame consists of a number of synchronisation blocks SYNBL (at least one synchronisation block) which are needed to detect the start of the frame at decoder side, and a number of payload blocks PLBL (at least one valid payload block or symbol) which carry the actual information. Frames are inserted synchronously or asynchronously in the audio or video stream, dependent on the technology. The insertion of the payload blocks is done consecutively, i.e. synchronised after the SYNBL blocks. Each payload block holds one or more bits of information. A payload block is therefore also called a symbol. The payload symbols include the information to be inserted into the WM signal, and optionally contain redundancy information used for error correction. A typical setting is for example 5 synchronisation blocks and 36 payload blocks per frame, each payload block carrying 2 bits, whereby 24 of these 72 bits are used for error correction resulting in a net payload of 48 bits per frame.

In the watermarking encoder in Fig. 1 payload data PLD to be used for watermarking an audio (or video) signal AS is input to an error correction and/or detection encoding stage ECDE which adds redundancy bits facilitating a recovery from erroneously detected symbols in the decoder. In a downstream modulation and spectrum spreading stage MS a modulation and a spreading is carried out. The output signal of stage MS is fed to a psycho-acoustical shaping stage PAS which shapes the WS signal such that the WM is not audible with respect to the current level of audio signal AS, and which feeds its output signal to a signal adder and decision stage SAD and to a decoder stage DEC. The watermark is shaped in stage PAS block-wise according to psycho-acoustic principles, i.e. the ratio between watermark and audio energy may change from symbol to symbol. This shaping represents a multiplication of the watermark signal by the masking level of the audio signal.
The decoder stage DEC implements a decoder according to Fig. 2. Stages PAS and SAD each receive the audio (or video) stream signal AS and process the WM frames symbol by symbol. Stage SAD determines whether the payload data PLD have been decoded correctly in decoder DEC for a current WM frame FRₙ. If true, the psycho-acoustical shaped WM symbol is added to the current frame. If not true, the current symbol in the current frame FRₙ is skipped. Thereafter the processing continues for the next symbol following the current symbol. After the processing for a WM frame is completed a correspondingly watermarked frame WAS embedded in the audio signal is output. Thereafter the processing continues for the frame FRₙ₊₁ following the current frame.

In the watermarking decoder in Fig. 2 a watermarked frame WAS of the audio (or video) signal passes through a spectral whitening stage SPW (which reverses the shaping that was done in stage PAS) and a de-spreading and demodulation stage DSPDM that retrieves the embedded WM symbol data from the signal WAS. The WM symbol is passed to an error correction and/or detection and decoding stage ECDD that outputs the valid payload data PLD.

The basic principle for the invention is explained by an example with two watermark sequences being used, where one is exactly the negative version of the other. The output signal r of the encoder is the (vector) sum of the audio signal a and an optionally shaped watermark spreading sequence w: *r₁* = *a* + *w.*
This addition is normally carried out in the time domain, but it is mathematically equivalent to an addition in the frequency domain: *r₁* = *F*⁻¹(*F*(*a*) + *F*(*w*)), wherein *F*() denotes a Fourier transform and *F*⁻¹() denotes an inverse Fourier transform.
At decoder side the watermark is retrieved by correlating the whitened encoder output signal (which in the mean time might be altered by some noise or attack) with the known spreading sequence. A perfect correlation result is achieved if the encoder output signal is the same as the spreading sequence.

Fig. 4 shows the addition of a watermark signal vector WM to an audio (or video) signal AS at encoder side for a single spectral line in the frequency domain having an imaginary direction IM and a real direction RE. The encoder output signal EOS has nearly the same angle α as the audio signal AS because the audio signal has a much larger amplitude than the watermark signal. The watermark signal WM is depicted in the drawing in a severely exaggerated fashion. The real magnitude of the watermark signal as resulting from the psycho-acoustic shaping in stage PAS has a level that is about 20 to 70dB lower than that of the audio signal.

Fig. 5 shows the decoding for a single spectral line in the frequency domain. At decoder side the 'resulting signal' is received as input signal. Through 'whitening' or reverse psycho-acoustic shaping it is normalised to an appropriate magnitude. 'Whitening' means multiplying or magnifying the magnitude of each received spectral value of an audio frame such that all audio signal magnitudes (in which the watermark signal is embedded) get the same value in a frame. Thereby the audio signal itself is seriously distorted, but the resulting effect is that the magnitudes of the watermark signal spectral values get a value that basically corresponds to their original magnitude level.
In this example the received decoder input signal is reduced in its magnitude. However, because the embedded watermark signal portion is much smaller than the audio signal portion, the reverse shaping or whitening is dependent practically on the audio signal magnitude only, i.e. the magnitude of the 'input signal' after whitening or inverse psycho-acoustic shaping, and it is independent from the watermark signal magnitude.
Since the angle β between the whitened encoder output signal WEOS and the watermark signal vector WM is nearly 'π', i.e. it is closer to 'π' than to '0', the correlation in the decoder indicates for this line that a negative or negated spreading sequence has been inserted in the encoder despite that, in fact, a positive spreading sequence was used in the encoder.

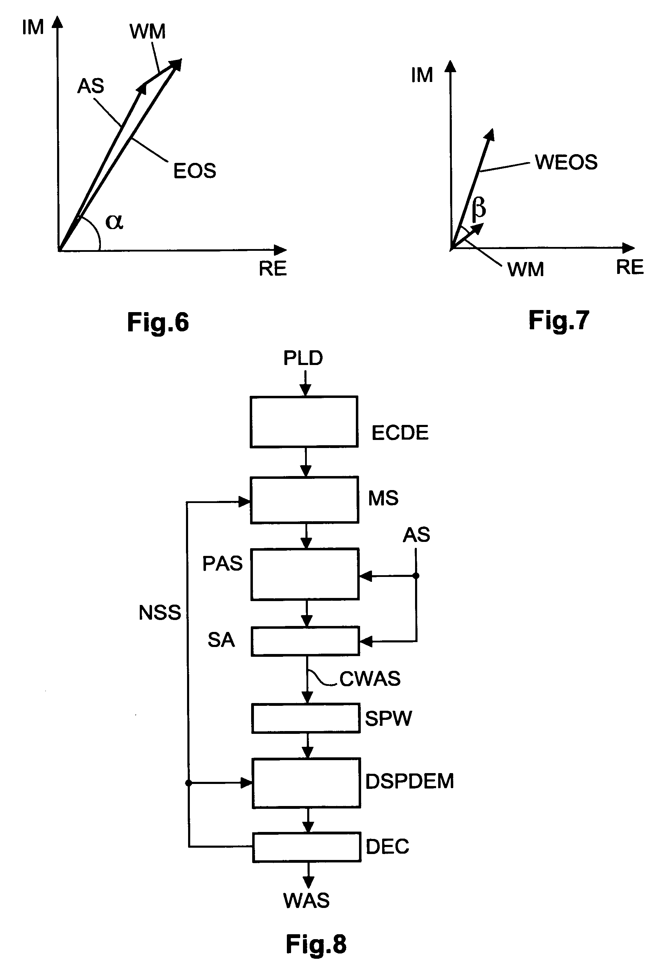

Fig. 6 shows again the embedding of a watermark signal WM to an audio (or video) signal AS at encoder side for a single spectral line, like in Fig. 4 but this time with the negative or negated watermark signal or sequence WM of Fig. 4.

Fig. 7 shows again the decoding for a single spectral line in the frequency domain. Since the angle β between the whitened encoder output signal WEOS and the watermark signal vector WM is closer to '0' than to 'π', the correlation in the decoder identifies in this case correctly the negative or negated watermark signal value.

In the flowchart of the inventive encoder in Fig. 8, which uses signal adaptive spreading sequences, payload data PLD to be used for watermarking an audio or video signal AS is input to an error correction and/or detection encoding stage ECDE. In a downstream modulation and spectrum spreading stage MS a modulation and a spreading is carried out. The output signal of stage MS is fed to a psycho-acoustical or psycho-visual, respectively, shaping stage PAS which shapes the MS output signal such that the WM is not audible, or visible, with respect to the current level of audio or video signal AS, and which feeds its output signal to a signal adder stage SA. The watermark is shaped in stage PAS block-wise according to psycho-acoustic, or psycho-visual, principles, i.e. the ratio between watermark and audio energy may change from symbol to symbol. This shaping represents a multiplication of the watermark signal by the masking level of the audio or video signal. Stages PAS and SAD each receive the audio or video stream signal AS and process the WM frames FRₙ symbol by symbol.
The watermarked audio or video signal is tested on its correct decodability using the following stages. A candidate watermarked frame CWAS of the audio or video signal passes through a spectral whitening stage SPW (which reverses the shaping that was done in stage PAS) and a de-spreading and demodulation stage DSPDEM that retrieves the embedded candidate WM symbol data from the signal CWAS. The candidate WM symbol is passed to a decision stage DEC. This stage may control the repetition of the processing in stages MS to DSPDEM using the next spreading sequence NSS. As an alternative, the candidate spreading sequences can be used and processed in parallel in stages MS to DSPDEM. After all candidate spreading sequences have been applied on the current frame, stage DEC decides which one of the spreading sequences can be recovered best or correctly in a decoder, i.e. which one gives a clear peak in the correlation. Finally, stage DEC outputs the correspondingly selected valid watermarked audio or video signal frame WAS. Another example is given to explain the invention. Since the phase of an audio signal is easily changed by reverberation or intentional attack, BPSK modulation of the WM signal is not very robust. A better way is to use for example two different m-sequences, one of them for encoding a binary zero (m_0) and the other one for encoding a binary one (n_0). The WM decoder correlates the received audio with both m-sequences and chooses that binary value the related correlation result of which gives the best match.
The inventive encoder uses in this case for example four different sequences, two for encoding a binary zero (m_0 and m_1) and two for encoding a binary one (n_0 and n_1). One implementation is to use two different m-sequences (m_0 and n_O) and to generate through phase shifting the remaining sequences, i.e. n_1 = (-1)* n_0 and m_1 = (-1)* m_0. Another implementation is to use four different m-sequences.
If for example a binary zero is to be encoded, a known encoder would use m_0 only.
The inventive encoder, however, adds the shaped version of m_0 to the audio signal, correlates the sum with m_0, stores the result of the correlation, also adds the shaped version of m_1 to the audio, correlates the sum with m_1, and stores the result of the correlation. A decision algorithm then selects the sequence with the best correlation result. This m-sequence is finally used for the encoding of the current watermark signal frame.
Advantageously, the decoder for the improved watermark needs not be changed if only two sequences per value are used and one sequence is the negative or negated version of the other. The correlation simply gives sometimes a negative and sometimes a positive peak for the same binary value. Therefore only the absolute value of the correlation has to be taken into account.
Otherwise, the decoder correlates all m-sequences with the received watermarked audio signal. If one of the m_k sequences matches best, a binary zero is detected, otherwise a binary one.

The invention makes watermarking much more robust, which may be the difference between receiving no watermark at all and receiving a watermark. Tests have shown that, when using the invention, the peak confidence of the correlation improves by 50% from 32% to 48% (0% meaning no peak in the correlation, 100% meaning a perfect match) when using two different m-sequences per binary value.
The costs are the need for more processing power. The encoder has to shape several sequences and to correlate them in order to decide which one is best. But if the same audio signal is watermarked several times with different WM payloads, like for example in watermarking Academy Screeners, the decision which sequence to use can be made once and thereafter stored for use in subsequent encodings.
If only two sequences are used per binary value, the decoder needs not be changed at all. Otherwise the decoder has to calculate more correlations. In the academy screener scenario this is irrelevant, since decoding is done very seldom and not in real-time.

## Claims

1. Method for watermarking an audio or video signal (AS) with watermark data (PLD) using a spread spectrum, said method including the steps:
a) modulating (MS) a first candidate encoder spreading sequence by watermark data bits so as to get a modulated watermark signal;
b) determining the current masking level of said audio or video signal and performing a corresponding psycho-acoustic or psycho-visual, respectively, shaping (PAS) of said modulated watermark signal;
c) embedding (SA) said psycho-acoustically or psycho-visually shaped watermark signal in said audio or video signal,
**characterised by**:
d) spectrally whitening (SPW) said audio or video signal including said embedded watermark signal;
e) de-spreading and demodulating (DSPDEM) said spectrally whitened audio or video signal including said embedded watermark signal using a correlation so as to get a first candidate watermark signal;
- repeating steps a) to e) one or more times using different candidate encoder spreading sequences;
- deciding (DEC) which one of the correlation results yields the best match and outputting that watermarked audio or video signal (WAS) which was watermarked with the corresponding candidate encoder spreading sequence.

2. Method for watermarking an audio or video signal (AS) with watermark data (PLD) using a spread spectrum, said method being **characterised by** the steps:
- modulating (MS) a first and at least a second candidate encoder spreading sequence by watermark data bits so as to get correspondingly modulated watermark signals;
- determining the current masking level of said audio or video signals and performing a corresponding psycho-acoustic or psycho-visual, respectively, shaping (PAS) of said modulated watermark signals;
- embedding (SA) said psycho-acoustically or psycho-visually shaped watermark signals in said audio or video signal resulting in a corresponding number of audio or video signals;
- spectrally whitening (SPW) said audio or video signals each one including said corresponding embedded watermark signal;
- de-spreading and demodulating (DSPDEM) said spectrally whitened audio or video signals including said corresponding embedded watermark signal using a correlation so as to get a first and at least a second candidate watermark signal;
- deciding (DEC) which one of the correlation results yields the best match and outputting that watermarked audio or video signal (WAS) which was watermarked with the corresponding candidate encoder spreading sequence.

3. Apparatus for watermarking an audio or video signal (AS) with watermark data (PLD) using a spread spectrum, said apparatus including:
a) means (MS) being adapted for modulating a first candidate encoder spreading sequence by watermark data bits so as to get a modulated watermark signal;
b) means (PAS) being adapted for determining the current masking level of said audio or video signal and performing a corresponding psycho-acoustic or psycho-visual, respectively, shaping of said modulated watermark signal;
c) means (SA) being adapted for embedding said psycho-acoustically or psycho-visually shaped watermark signal in said audio or video signal,
**characterised by**:
d) means (SPW) being adapted for spectrally whitening said audio or video signal including said embedded watermark signal;
e) means (DSPDEM) being adapted for de-spreading and demodulating said spectrally whitened audio or video signal including said embedded watermark signal using a correlation so as to get a first candidate watermark signal, whereby means a) to e) repeat the processing one or more times using different candidate encoder spreading sequences;
- means (DEC) being adapted for deciding which one of the correlation results yields the best match and outputting that watermarked audio or video signal (WAS) which was watermarked with the corresponding candidate encoder spreading sequence.

4. Apparatus for watermarking an audio or video signal (AS) with watermark data (PLD) using a spread spectrum, said apparatus including:
- means (MS) being adapted for modulating a first and at least a second candidate encoder spreading sequence by watermark data bits so as to get correspondingly modulated watermark signals;
- means (PAS) being adapted for determining the current masking level of said audio or video signals and performing a corresponding psycho-acoustic or psycho-visual, respectively, shaping of said modulated watermark signals;
- means (SA) being adapted for embedding said psycho-acoustically or psycho-visually shaped watermark signals in said audio or video signal resulting in a corresponding number of audio or video signals;
- means (SPW) being adapted for spectrally whitening said audio or video signals each one including said corresponding embedded watermark signal;
- means (DSPDEM) being adapted for de-spreading and demodulating said spectrally whitened audio or video signals including said corresponding embedded watermark signal using a correlation so as to get a first and at least a second candidate watermark signal;
- means (DEC) being adapted for deciding which one of the correlation results yields the best match and outputting that watermarked audio or video signal (WAS) which was watermarked with the corresponding candidate encoder spreading sequence.

5. Method according to claim 1 or 2, or apparatus according to claim 3 or 4, wherein on said payload data (PLD) an error correction and/or detection encoding (ECDE) is carried out before said modulating (MS).

6. Method according to one of claims 1, 2 and 5, or apparatus according to one of claims 3 to 5, wherein two different candidate encoder spreading sequences are used in said modulation (MS) and in said de-spreading and demodulating (DSPDEM), respectively, one of the candidate encoder spreading sequences being a negative or negated version of the other candidate encoder spreading sequence, and wherein in said de-spreading and demodulating (DSPDEM), and optionally in a corresponding watermark signal decoder, the magnitude only of the correlation result is evaluated.

7. An audio or video signal (AS) that is encoded according to the method of one of claims 1, 2, 5 and 6.

8. A storage medium containing or having recorded on it an audio or video signal (AS) that was encoded according to the method of one of claims 1, 2, 5 and 6.

## Patentansprüche

1. Verfahren zur Kennzeichnung eines Audio- oder Videosignals mit Wasserzeichendaten (PLD) mittels eines Spreizspektrums, umfassend die Schritte:
a) Modulieren (MS) einer ersten Kodierer-Test-Spreizsequenz durch Wasserzeichendaten-Bits um ein moduliertes Wasserzeichensignal zu erhalten;
b) Bestimmen des aktuellen Maskierungspegels des Audio- oder Videosignals und Ausführen einer entsprechenden psycho-akustischen bzw. psycho-visuellen Formung (shaping)(PAS) des modulierten Wasserzeichensignals;
c) Einbetten (SA) des psycho-akustisch oder psycho-visuell geformten Wasserzeichensignals in das Audio- oder Videosignal, **gekennzeichnet durch**:
d) spektrales Whitening (SPW) des Audio- oder Videosignals einschließlich des eingebetteten Wasserzeichensignals;
e) Entspreizen und Demodulieren (DSPDEM) des Spektral-Whitening-Audio- oder Videosignals einschließlich des eingebetteten Wasserzeichensignals mittels einer Korrelation, um ein erstes Test-Wasserzeichensignal zu erhalten;
- ein- oder mehrmaliges Wiederholen der Schritte a) bis e) unter Verwendung verschiedener Kodierer-Test-Spreizsequenzen;
- Entscheiden (DEC) welches der Korrelationsergebnisse die beste Übereinstimmung ergibt und Ausgeben des mit Wasserzeichen gekennzeichneten Audio- oder Videosignals (WAS), welches mit der entsprechenden Kodierer-Test-Spreizsequenz wasserzeichen-gekennzeichnet wurde.

2. Verfahren zum Kennzeichnen eines Audio- oder Videosignals (AS) mit Wasserzeichendaten (PLD) mittels eines Spreizspektrums, **gekennzeichnet durch** die Schritte:
- Modulieren (MS) einer ersten und wenigstens einer zweiten Kodierer-Test-Spreizsequenz **durch** Wasserzeichendaten-Bits um entsprechend modulierte Wasserzeichensignale zu erhalten;
- Bestimmen des aktuellen Maskierungspegels der Audio- oder Videosignale und Ausführen einer entsprechenden psycho-akustischen bzw. psycho-visuellen Formung (PAS) der modulierten Wasserzeichensignale;
- Einbetten (SA) der psycho-akustisch oder psycho-visuell geformten Wasserzeichensignale in das Audio- oder Videosignal, was zu einer entsprechenden Anzahl von Audio- oder Videosignalen führt;
- spektrales Whitening (SPW) der Audio- oder Videosignale, von denen jedes das entsprechende eingebettete Wasserzeichensignal enthält;
- Entspreizen und Demodulieren (DSPDEM) der Spektral-Whitening-Audio- oder Videosignale einschließlich des entsprechenden eingebetteten Wasserzeichensignals mittels einer Korrelation, um ein erstes und wenigstens ein zweites Test-Wasserzeichensignal zu erhalten;
- Entscheiden (DEC), welches der Korrelationsergebnisse die beste Übereinstimmung ergibt und Ausgeben desjenigen mit Wasserzeichen gekennzeichneten Audio- oder Videosignals (WAS), welches mit der entsprechenden Kodierer-Test-Spreizsequenz wasserzeichen-gekennzeichnet wurde.

3. Vorrichtung zur Kennzeichnung eines Audio- oder Videosignals (AS) mit Wasserzeichendaten (PLD) mittels eines Spreizspektrums, umfassend:
a) Mittel (MS) zum Modulieren einer ersten Kodierer-Test-Spreizsequenz durch Wasserzeichendaten-Bits um ein moduliertes Wasserzeichensignal zu erhalten;
b) Mittel (PAS) zum Bestimmen des aktuellen Maskierungspegels des Audio- oder Videosignals und zum Ausführen einer entsprechenden psycho-akustischen bzw. psycho-visuellen Formung (shaping) des modulierten Wasserzeichensignals;
c) Mittel (SA) zum Einbetten des psycho-akustisch oder psycho-visuell geformten Wasserzeichensignals in das Audio- oder Videosignal, **gekennzeichnet durch**:
d) Mittel (SPW) zum spektralen Whitening des Audio- oder Videosignals einschließlich des eingebetteten Wasserzeichensignals;
e) Mittel (DSPDEM) zum Entspreizen und Demodulieren der Spektral-Whitening-Audio- oder Videosignale einschließlich des entsprechenden eingebetteten Wasserzeichensignals mittels einer Korrelation, um ein erstes und wenigstens ein zweites Test-Wasserzeichensignal zu erhalten, wobei die Mittel a) bis e) die Verarbeitung ein- oder mehrmals unter Verwendung verschiedener Kodierer-Test-Spreizsequenzen wiederholen;
- Mittel (DEC) zum Entscheiden, welches der Korrelationsergebnisse die beste Übereinstimmung ergibt, und zum Ausgeben des mit Wasserzeichen gekennzeichneten Audio- oder Videosignals (WAS), welches mit der entsprechenden Kodierer-Test-Spreizsequenz wasserzeichen-gekennzeichnet wurde.

4. Vorrichtung zur Kennzeichnung eines Audio- oder Videosignals (AS) mit Wasserzeichendaten (PLD) mittels eines Spreizspektrums, umfassend:
- Mittel (MS) zum Modulieren einer ersten und wenigstens einer zweiten Kodierer-Test-Spreizsequenz durch Wasserzeichendaten-Bits um entsprechend modulierte Wasserzeichensignale zu erhalten;
- Mittel (PAS) zum Bestimmen des aktuellen Maskierungspegels der Audio- oder Videosignale und zum Ausführen einer entsprechenden psycho-akustischen bzw. psycho-visuellen Formung der modulierten Wasserzeichensignale;
- Mittel zum Einbetten der psycho-akustisch oder psycho-visuell geformten Wasserzeichensignale in das Audio- oder Videosignal, was zu einer entsprechenden Anzahl von Audio- oder Videosignalen führt;
- Mittel (SPW) zum spektralen Whitening der Audio- oder Videosignale, von denen jedes das entsprechende eingebettete Wasserzeichensignal enthält;
- Mittel (DSPDEM) zum Entspreizen und Demodulieren der Spektral-Whitening-Audio- oder Videosignale einschließlich des entsprechenden eingebetteten Wasserzeichensignals mittels einer Korrelation, um ein erstes und wenigstens ein zweites Test-Wasserzeichensignal zu erhalten;
- Mittel (DEC) zum Entscheiden, welches der Korrelationsergebnisse die beste Übereinstimmung ergibt, und zum Ausgeben desjenigen mit Wasserzeichen gekennzeichneten Audio- oder Videosignals (WAS), welches mit der entsprechenden Kodierer-Test-Spreizsequenz wasserzeichen-gekennzeichnet wurde.

5. Verfahren nach Anspruch 1 oder 2, oder Vorrichtung nach Anspruch 3 oder 4, bei dem bzw. bei der vor dem Modulieren (MS) bei den Nutzdaten (PLD) eine Fehlerkorrektur und/oder eine Detektions-Kodierung (ECDE) ausgeführt wird.

6. Verfahren nach einem der Ansprüche 1, 2 und 5 oder Vorrichtung nach einem der Ansprüche 3 bis 5, bei dem bzw. bei der zwei verschiedene Kodierer-Test-Spreizsequenzen in der Modulation (MS) bzw. in der Entspreizung und Demodulation (DSPDEM) verwendet werden, wobei eine der Kodierer-Test-Spreizsequenzen eine negative oder negierte Version der anderen Kodierer-Test-Spreizsequenz ist, und wobei bei der Entspreizung und Demodulation (DSPDEM) und wahlweise in einem entsprechenden Wasserzeichensignal-Dekodierer nur der Betrag der Korrelation ausgewertet wird.

7. Audio- oder Videosignal, das nach dem Verfahren eines der Ansprüche 1, 2, 5 und 6 kodiert ist.

8. Aufzeichnungsträger, der ein Audio- oder Videosignal (AS), das nach dem Verfahren eines der Ansprüche 1, 2, 5 und 6 kodiert wurde, enthält, oder auf dem ein solches aufgezeichnet ist.

## Revendications

1. Procédé de tatouage numérique d'un signal audio ou vidéo (AS) avec des données de tatouage numérique (PLD) qui utilise un spectre élargi, ledit procédé comprenant les étapes suivantes :
a) modulation (MS) d'une première séquence de codeur candidate d'élargissement à l'aide de bits de données de tatouage numérique de façon à obtenir un signal de tatouage numérique modulé ;
b) détermination du niveau courant de masquage dudit signal audio ou vidéo et réalisation d'une mise en forme psychoacoustique ou psychovisuelle (PAS) correspondante, respectivement, dudit signal modulé de tatouage numérique ;
c) imbrication (SA) dudit signal de tatouage numérique mis en forme de façon psychoacoustique ou psychovisuelle dans ledit signal audio ou vidéo,
**caractérisé par**,
d) blanchiment spectral (SPW) dudit signal audio ou vidéo comprenant ledit signal de tatouage numérique imbriqué ;
e) rétrécissement et démodulation (DSPDEM) dudit signal audio ou vidéo blanchi de façon spectrale qui contient ledit signal de tatouage numérique imbriqué en utilisant une corrélation de façon à obtenir un premier signal candidat de tatouage numérique ;
- répétition des étapes a) à e) au moins une fois en utilisant différentes séquences de codeur candidates d'élargissement;
- détermination (DEC) duquel des résultats de la corrélation donne la meilleure correspondance et génération du signal audio ou vidéo tatoué numériquement (WAS) qui a été tatoué numériquement avec la séquence de codeur d'élargissement candidate de correspondante.

2. Procédé de tatouage numérique d'un signal audio ou vidéo (AS) avec des données de tatouage numérique (PLD) qui utilise un spectre élargi, ledit procédé étant **caractérisé par** les étapes suivantes :
- modulation (MS) d'une première et au moins d'une deuxième séquence(s) de codeur candidate(s) d'élargissement à l'aide de bits de données de tatouage numérique de façon obtenir des signaux de tatouage numérique modulésde façon correspondante;
- détermination du niveau de masquage courant desdits signaux audio ou vidéo et réalisation d'une mise en forme psychoacoustique ou psychovisuelle (PAS) correspondante, respectivement, desdits signaux modulés de tatouage numérique ;
- imbrication (SA) desdits signaux de tatouage numérique mis en forme de façon psychoacoustique ou psychovisuelle dans ledit signal audio ou vidéo qui résultent d'un certain nombre correspondant de signaux audio ou vidéo ;
- blanchiment spectral (SPW) desdits signaux audio ou vidéo, chacun comprenant ledit signal de tatouage numérique imbriqué correspondant ;
- rétrécissement et démodulation (DSPDEM) desdits signaux audio ou vidéo blanchis de façon spectrale qui contiennent ledit signal de tatouage numérique imbriqué correspondant en utilisant une corrélation de façon à obtenir un premier et au moins un deuxième signaux candidats de tatouage numérique ;
- détermination (DEC) duquel des résultats de la corrélation donne la meilleure correspondance et génération du signal audio ou vidéo tatoué numériquement (WAS) qui a été tatoué numériquement avec la séquence de codeur d'élargissement candidate correspondante.

3. Appareil de tatouage numérique d'un signal audio ou vidéo (AS) avec des données de tatouage numérique (PLD) utilisant un spectre élargi, ledit appareil comprenant :
a) un moyen (MS) conçu pour la modulation d'une première séquence de codeur candidate d'élargissement à l'aide de bits de données de tatouage numérique de façon à obtenir un signal de tatouage numérique modulé ;
b) un moyen (PAS) conçu pour déterminer le niveau de masquage courant dudit signal audio ou vidéo et réalisation d'une mise en forme psychoacoustique ou psychovisuelle correspondante, respectivement, dudit signal de tatouage numérique modulé ;
c) un moyen (SA) conçu pour imbriquer dans ledit signal audio ou vidéo ledit signal de tatouage numérique mis en forme de façon psychoacoustique ou psychovisuelle, respectivement,
**caractérisé par** :
d) un moyen (SPW) conçu pour blanchir de façon spectrale ledit signal audio ou vidéo comprenant ledit signal imbriqué de tatouage numérique ;
e) un moyen (DSPDEM) conçu pour rétrécir et démoduler ledit signal audio ou vidéo blanchi de façon spectrale comprenant ledit signal de tatouage numérique imbriqué en utilisant une corrélation de façon à obtenir un premier signal de tatouage numérique candidat, les moyens a) à e) répétant le traitement au moins une fois en utilisant différentes séquences de codeur candidates d'élargissement;
- un moyen (DEC) conçu pour déterminer lequel des résultats de la corrélation donne la meilleure correspondance et pour générer le signal audio ou vidéo (WAS) qui a été tatoué avec la séquence de codeur d'élargissement candidate correspondante.

4. Appareil de tatouage numérique d'un signal audio ou vidéo (AS) avec des données de tatouage numérique (PLD) utilisant un spectre élargi , ledit appareil comprenant :
- un moyen (MS) conçu pour la modulation d'une première et d'au moins une deuxième séquences de codeur candidates d'élargissement à l'aide de bits de données de tatouage numérique de façon à obtenir des signaux de tatouage numérique modulés de façon correspondante;
- un moyen (PAS) conçu pour déterminer le niveau de masquage courant desdits signaux audio ou vidéo et réalisation d'une mise en forme correspondante psychoacoustique ou psychovisuelle, respectivement, desdits signaux de tatouage numérique modulés ;
- un moyen (SA) conçu pour imbriquer dans un nombre correspondant de signaux audio ou vidéo lesdits signaux de tatouage numérique mis en forme de façon psychoacoustique ou psychovisuel, résultants ;
- un moyen (SPW) conçu pour blanchir de façon spectrale lesdits signaux audio ou vidéo chacun comprenant ledit signal imbriqué de tatouage numérique correspondant ;
- un moyen (DSPDEM) conçu pour rétrécir et démoduler lesdits signaux audio ou vidéo blanchis de façon spectrale comprenant ledit signal de tatouage numérique imbriqué correspondant en utilisant une corrélation de façon à obtenir un premier et au moins un deuxième signaux de tatouage numérique candidats;
- un moyen (DEC) conçu pour déterminer lequel des résultats de la corrélation donne la meilleure correspondance et pour générer le signal audio ou vidéo (WAS) qui a été tatoué numériquement avec la séquence de codeur d'élargissement candidate correspondante.

5. Procédé selon la revendication 1 ou 2, ou appareil selon la revendication 3 ou 4, dans lesquels sur lesdites données utiles (PLD) une correction d'erreur et/ou un codage de détection (ECDE) sont effectués avant ladite modulation (MS).

6. Procédé selon l'une des revendications 1, 2 et 5, ou appareil selon l'une des revendications 3 à 5, dans lesquels deux séquences de codeur candidates différentes d'élargissement sont utilisées dans la dite modulation (MS) et dans lesdits rétrécissement et démodulation (DSPDEM), respectivement, une des séquences de codeur candidates d'élargissement étant une version négative ou inversée de l'autre séquence de codeur candidate d'élargissement, et dans lequel dans lesdits rétrécissement et démodulation (DSPDEM), et optionnellement dans un décodeur de signal de tatouage numérique correspondant, seule la grandeur du résultat de la corrélation est évaluée.

7. Signal audio ou vidéo (AS) codé selon le procédé conforme à une des revendications 1, 2, 5 et 6.

8. Support de mémoire contenant ou sur lequel est enregistré un signal audio ou vidéo (AS) codé selon le procédé conforme à une des revendications 1, 2, 5 et 6.
